# EUROPEAN PATENT SPECIFICATION

(11) **EP 3 311 234 B1**
(45) Date of publication and mention of the grant of the patent: **18.03.2020**
(21) Application number: 15907903.7
(22) Date of filing: 13.11.2015
(51) Int. Cl.: G05D 23/13, E03C 1/04, F16K 17/00

(54) **WATER TEMPERATURE MANAGEMENT SYSTEM**
SYSTEM ZUR WASSERTEMPERATURREGELUNG
SYSTÈME DE GESTION DE TEMPÉRATURE D'EAU

(30) Priority: 05.11.2015 SG 10201509125T
(43) Date of publication of application: 25.04.2018
(73) Proprietor: JVL Engineering PTE LTD., Singapore 569544 (SG)
(72) Inventor: LOONG, Meng, Singapore 569544 (SG)
(74) Representative: Gill Jennings & Every LLP
(86) International application number: PCT/SG2015/050450
(87) International publication number: WO 2017/078615

(56) References cited:
- EP-A1- 2 706 154
- EP-A1- 2 706 154
- WO-A1-2011/014121
- FR-A1- 2 946 767
- GB-A- 2 435 490
- US-A- 5 462 224
- US-A1- 2005 258 258
- US-A1- 2015 034 190
- US-A1- 2015 034 190

## Description

### FIELD OF THE INVENTION

The present invention relates to the regulation of water temperature in a hot/cold water mixer system, particularly for use in a domestic setting. It is envisaged for particular use in regulating shower water temperature in an environment where many users are connected to the same water supply, such as in an apartment complex or hotel.

### BACKGROUND TO THE INVENTION

Consistency of water temperature can be difficult to achieve where more than one user is connected to a single source of water. This problem is commonly experienced where several showers are connected to a single source of water. Typically, a user sets the water temperature of their shower to be at a desired level. When a subsequent user turns on a shower or other tap from the same water source, the temperature of the water at the first user suddenly increases or decreases. This problem recurs each time a subsequent shower is turned on. As a corollary, the turning off of a shower or other tap in the system leads to a temperature rise or drop in the other showers. Such temperature changes can have severe effects on water users, especially in children. A considerable amount of water is also wasted during the re-adjustment to optimal temperature.

It is therefore desirable to provide a water inlet/outlet system that reduces the effect of changes in water outlet temperature which may otherwise result from changes to upstream water usage.

US2015/034190 discloses a water tempering system. EP2706154 discloses a mixing device, especially for showers.

### SUMMARY OF THE INVENTION

In a broad form, a pressure release valve is connected to the hot/cold mixer chamber of a hot/cold water mixer system, the valve operational to recirculate some of the water within the mixer chamber prior to exiting the chamber. In one aspect of the invention, a hot/cold water mixer is provided, which includes a hot/cold water mixing chamber having: a hot water inlet; a cold water inlet; a water outlet; and a pressure release system, the pressure release system including: a pressure release outlet in the mixing chamber; a pressure release inlet adjacent the water outlet; and a pressure release valve extending between the pressure release outlet and the pressure release inlet, the valve adapted to recirculate a portion of the water within the mixing chamber into the pressure release system.
In another form, there is provided a system for regulating water temperature in a hot/cold water mixer the system including: a hot/cold water mixer according to claim 1; a first water flow regulating device connected before the cold water inlet; and a second water flow regulating device connected before the hot water inlet, the water flow regulating device comprising a flow restricting member axially moveable within a water flow chamber, the flow restricting member including at least one of a tapered portion or a stepped portion, and wherein the size of a gap between the flow restricting member and internal walls of the water flow chamber varying according to an axial position of the flow restricting member, the water flow chamber having at least a first region and a second region whereby movement of the flow restricting member from the first region to the second region results in a step-change in the size of the gap between the flow restricting member and the internal walls of the water flow chamber.

Ideally, the desired temperature range at the water outlet is between 0 and 5, ideally 0 and 3, degrees Celsius of a user's selected outlet temperature.

In one form, the pressure release valve comprises an inlet connected to a body having an aperture for permitting water flow there through, the valve operational such that upon a decrease in water pressure upon the valve inlet, the valve assumes a closed position, increasing the pressure of the water flowing through the valve aperture, the increased pressure resulting in the water flowing through the valve to re-enter the water mixer chamber. To maintain the water temperature at an acceptable level, preferably the predetermined pressure level is between about 1.0 and 5 bar, ideally about 1.5 bar.

The present invention provides a mixer and a system for maintaining a substantially constant water outlet temperature in a hot/cold water mixing system following undesired changes in upstream water input. The system is particularly advantageous in environments where many users are connected to the same water supply, such as in an apartment complex or hotel. The system results in an added safety mechanism to ensure that users, in particular children, are not inadvertently scalded by a sudden increase in water temperature. Including both a pressure regulating device and water flow regulating device assists in maintaining both a near constant pressure and temperature at the mixer outlet.

### BRIEF DESCRIPTION OF THE DRAWINGS

An illustrative embodiment of the present invention will now be described with reference to the accompanying figures. Further features and advantages of the invention will also become apparent from the accompanying description.
Figure 1 is a schematic diagram of a hot/cold water mixer system including a pressure regulating device according to an embodiment of the invention;
Figure 2 is a side view of the hot/cold water mixer showing the pressure regulating device according to an embodiment of the invention;
Figure 3 is a cross sectional side view of the hot/cold water mixer of Figure 2;
Figure 4 is a top view of the hot/cold water mixer of Figure 2;
Figure 5 is a perspective view of the hot/cold water mixer of Figure 2;
Figure 6 is a cross sectional perspective view of the hot/cold water mixer of Figure 2; and
Figure 7 is a perspective view of the pressure release valve according to one embodiment.

### DESCRIPTION OF PREFERRED EMBODIMENT

The following description is presented to enable any person skilled in the art to make and use the invention, and is provided in the context of a particular application and its requirements. Various modifications to the disclosed embodiment will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

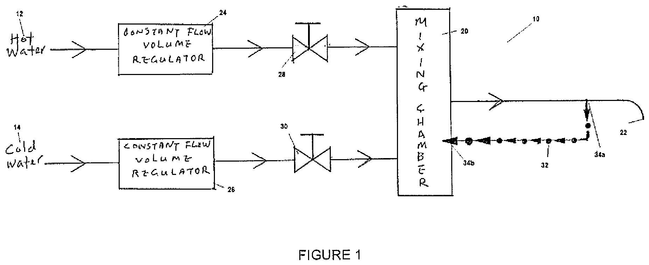

Figure 1 shows a hot/cold water mixer system 10. The system comprises a hot water inlet 12 and a cold water inlet 14. Hot water and cold water pumps may be connected to the respective inlets 12, 14 to assist with water flow into the mixer chamber 20 and water outlet 22.

Connected between the hot water inlet 12 and mixer chamber 20 is a water flow regulating device 24. An identical water flow regulating device 26 is connected between the cold water inlet 14 and the mixer chamber 20. The water flow regulating device 24, 26 is disclosed in PCT/SG2009/000324, the contents of which are herein disclosed in its entirety by cross-reference. The water flow regulating device 24, 26 maintains the pressure in the respective hot and cold water chambers 28, 30 at a predetermined level to overcome the drop in water pressure of a first users shower upon a second user turning on a tap connected to the same water source. The water flow regulating device 24, 26 comprises a flow restricting member axially moveable within a water flow chamber, the size of a gap between the flow restricting member and internal walls of the water flow chamber varying according to an axial position of the flow restricting member, the water flow chamber having at least a first region and a second region whereby movement of the flow restricting member from the first region to the second region results in a step-change in the size of the gap between the flow restricting member and the internal walls of the water flow chamber.

Within the hot/cold water mixing chamber 20 is a pressure regulating device 32. The pressure regulating device 32 is ideally located downstream of the hot and cold water chambers, just before water exits the water outlet 22.

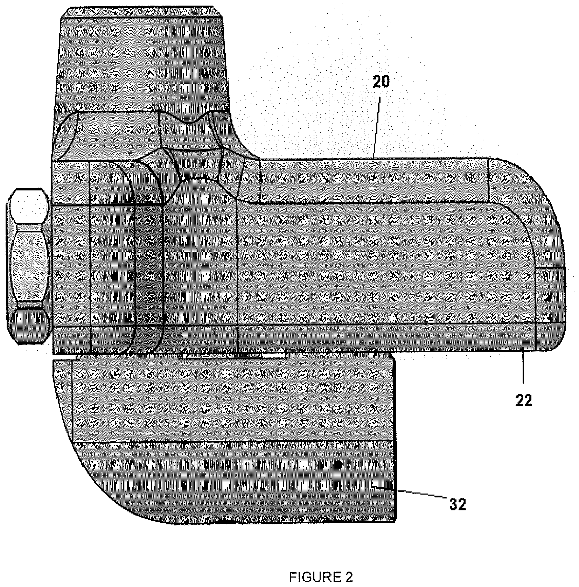

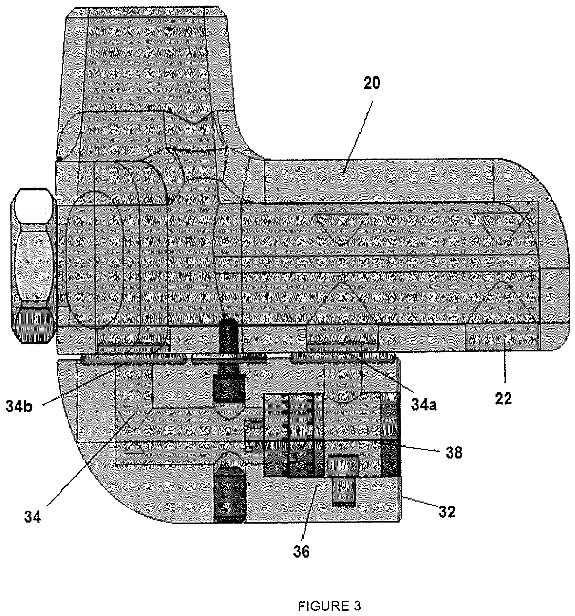

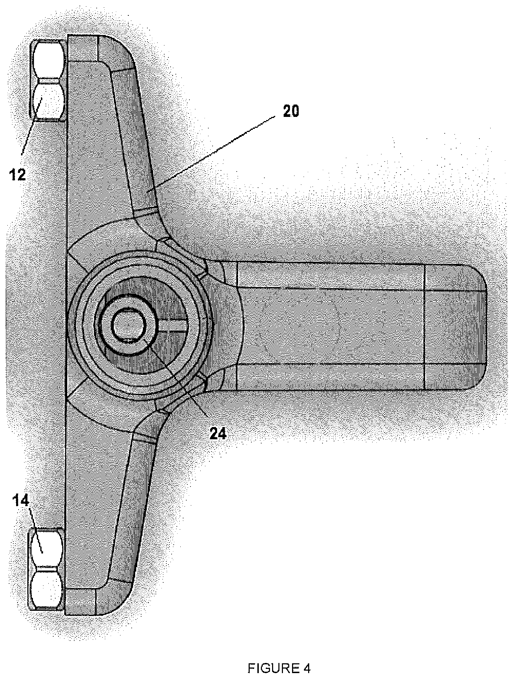

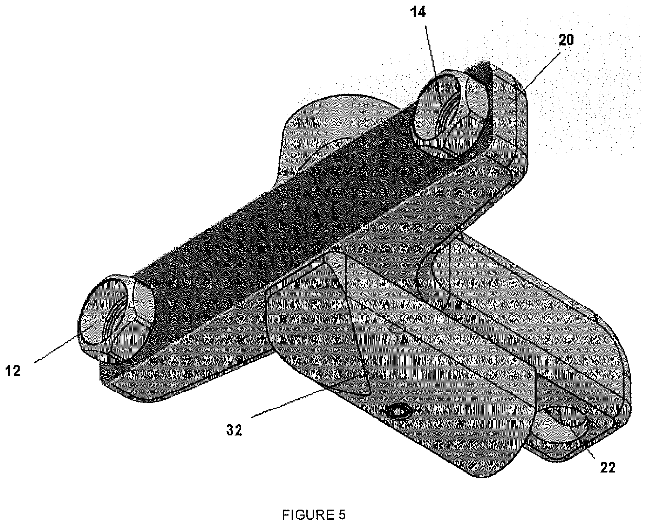

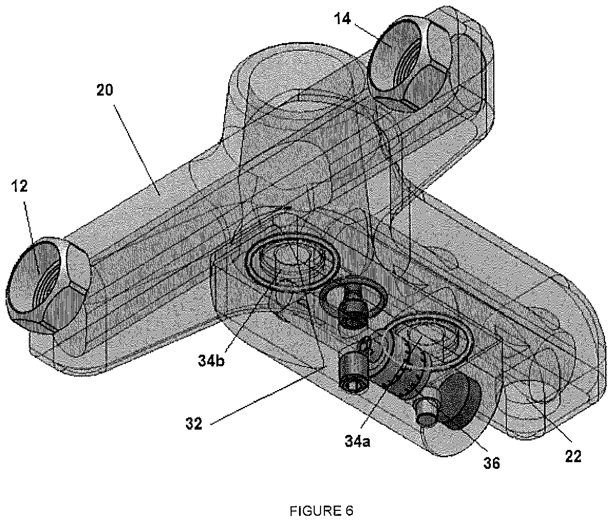

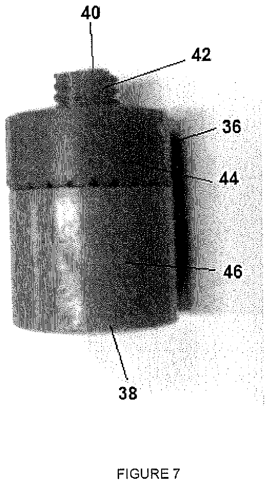

Figures 2 to 7 show the pressure regulating device 32 in greater detail. The pressure regulating device 32 extends from an outlet 34a in the mixing chamber 20 just before the water outlet 22 back to an inlet 34b to the mixing chamber 20 just downstream of the hot and cold water inlets to the mixing chamber 20. Within the device 32 is a pressure release valve 36. The pressure regulating device 32 is connected at each of its ends via screw thread to the mixer chamber.

Preferred (non-limiting) dimensions of the device 32 include:
Diameter of water flow regulating device outlet (24, 26): 12 mm
Dimensions of hot/cold water mixing chamber (20): 34mm by 30mm
Diameter of mixing chamber outlet (34a): 10mm
Diameter of mixing chamber inlet (34b): 10mm
Diameter of water outlet (22): ½ inch
Dimensions of pressure regulating device (32): 30mm by 80mm by 25mm

The valve 36 (preferred diameter 14mm) comprises a cylindrical body 38 (preferred diameter 15mm) having a central aperture 40 (preferred diameter 10mm) for permitting water flow through the valve 36 with a chamber screw connector 42 (preferred diameter 12mm) for connecting the valve 36 to the backflow tubing 34. The cylindrical body 38 is formed of a first portion 44 (preferred diameter 14mm) and a second portion 46 (preferred diameter 14mm). The first and second portions 44, 46 are connected to each other via a screw thread. The first portion 44 and second portion 46 are constructed from a resilient material, such as rubber, resulting in a slight axial movement between the first 44 and second 46 portions upon an increase or decrease in pressure throughout the surrounding pressure chamber 32.

In use, the water in the hot and cold water chambers 28, 30 will change in pressure depending upon the amount of water entering through the respective inlets 12, 14. In a traditional system, when the amount of cold water drops, for example because a second user has switched on a tap from the same water source, the pressure in the cold water chamber decreases (yet the hot water pressure stays constant), forcing less water through the mixer, resulting in a higher water temperature at the outlet. With the present embodiment, as the water pressure in the hot and cold water chambers drops to a predetermined level, the water flow regulating device 24 constantly stabilises and maintains the volume flow rates entering the mixing chamber, providing a consistent water outflow and an almost consistent temperature. Trials have shown that temperature variation of within 2 degrees Celsius is achievable, despite a drop or rise in the incoming hot water of 7 degrees Celsius.

The pressure regulating device 32 is a secondary mixing stage. As much as 25% of the water flowing into the mixer chamber 20 is back flowed via the pressure release valve back into the mixing chamber for another mixing process. The continuous mixing and remixing in the mixing chamber enables better water temperature stabilization. Trials have shown that using the pressure regulating device 32, temperature variations at the water outlet 22 are reduced to within 2 degrees Celsius. Additionally, the constant backflow and channelling dynamics between the two points assist in maintaining the volume flow rate in the event of sudden pressure drop.

The inventor's testing of the system yielded the following results:

### Example 1 - No water flow regulating device or pressure regulating device

At a pressure of 4.5 Bar in the cold water chamber with 8.6 L/min of cold water volume, the output temperature was 36.8 °C. The cold water chamber pressure was dropped to 1.5 Bar with 0 L/min of cold water volume, and the water outlet temperature increased to 44 °C, a 7.2 °C increase.

### Example 2 - With water flow regulating device and pressure regulating device, hot water kept at constant while varying the cold water pressure

**Table 1: Pressure settings for Example 2**

| Test 1 | | |
|---|---|---|
| Constant Hot Water Pressure | | |
| (Variable Cold Water Pressure) | | |
| Set | Hot water Pressure | Cold Water Pressure |
| | (bar) | (bar) |
| 1 | 2 | 2 |
| 2 | | 3 |
| 3 | | 4 |
| 4 | | 5 |
| 5 | 3 | 2 |
| 6 | | 3 |
| 7 | | 4 |
| 8 | | 5 |
| 9 | 4 | 2 |
| 10 | | 3 |
| 11 | | 4 |
| 12 | | 5 |
| 13 | 5 | 2 |
| 14 | | 3 |
| 15 | | 4 |
| 16 | | 5 |

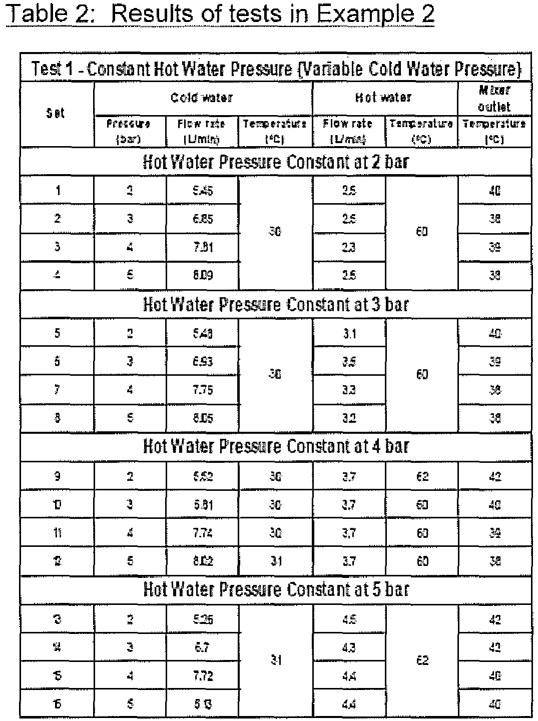

### Example 3 - With water flow regulating device and pressure regulating device, cold water pressure kept at constant while varying the hot water pressure

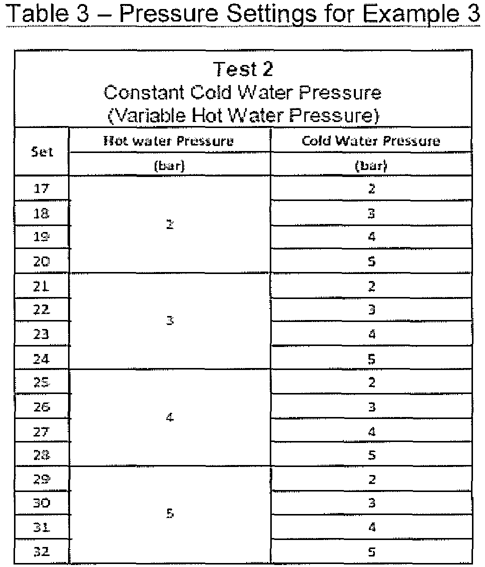

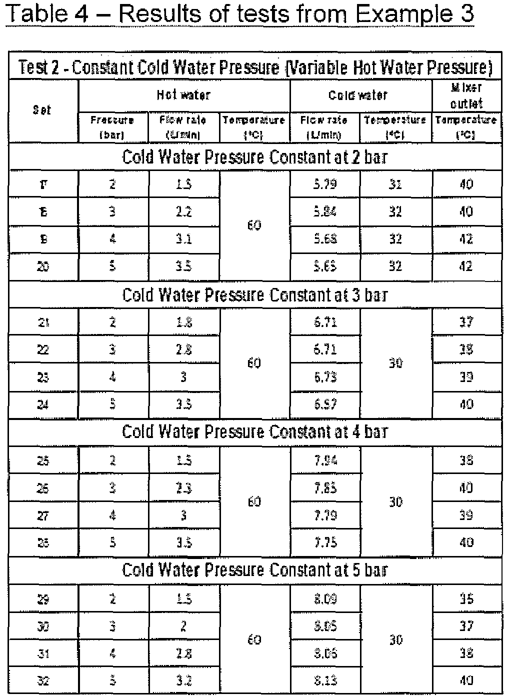

The test examples show that using the present embodiment, and maintaining a fixed mixer level position, varying the cold and hot water pressures from 2 to 5 bar, and fixing the cold and hot water temperatures at 30 degrees Celsius and 60 degrees Celsius respectively, the outlet water temperature can be maintained at around 39.2 ± 1.5°C in most cases.

The embodiment provides a system for maintaining a substantially constant water outlet temperature in a hot/cold water mixing system following undesired changes in upstream water input. The system is particularly advantageous in environments where many users are connected to the same water supply, such as in an apartment complex or hotel. The system results in an added safety mechanism to ensure that users, in particular children, are not inadvertently scalded by a sudden increase in water temperature.

Reference throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment.

Furthermore, the particular features, structures, or characteristics may be combined in any suitable manner in one or more combinations. It will be appreciated that persons skilled in the art could implement the present invention in different ways to the one described above, and variations may be produced without departing from its spirit and scope.

Any discussion of documents, devices, acts or knowledge in this specification is included to explain the context of the invention. It should not be taken as an admission that any of the material forms part of the prior art base or the common general knowledge in the relevant art, in any country, on or before the filing date of the patent application to which the present specification pertains.

## Claims

1. A hot/cold water mixer (10) including:
a hot/cold water mixing chamber (20) having:
a hot water inlet (12);
a cold water inlet (14);
a water outlet (22); and
a pressure release system, which includes:
a pressure release outlet (34a) in the mixing chamber;
a pressure release inlet (34b) adjacent the water outlet; and
a pressure release valve (36) extending between the pressure release outlet (34a) and the pressure release inlet (34b), wherein the pressure release system is arranged to backflow, via the valve (36), a portion of water flowing into the mixing chamber back into the mixing chamber,
**characterized in that** the pressure release valve (36) comprises an inlet connected to a body comprising a first portion and a second portion and having an aperture (40) for permitting water flow there through, the valve arranged such that upon a decrease in water pressure upon the valve inlet in use, the first and second portions are arranged to assume a position in which the pressure of the water flowing through the valve aperture is increased such that water flowing through the valve re-enters the mixing chamber.

2. A hot/cold water mixer according to claim 1, wherein the valve (20) is arranged to recirculate, in use, water within the mixing chamber such that the mixer maintains a desired temperature of water flowing through the water outlet at between 0 and 5 degrees Celsius of a user's selected outlet temperature.

3. A hot/cold water mixer according to claim 1, wherein the valve (20) is arranged to recirculate, in use, water within the mixing chamber such that the mixer maintains a desired temperature of water flowing through the water outlet at between 0 and 3 degrees Celsius of a user's selected outlet temperature.

4. A system for regulating water temperature in a hot/cold water mixer the system including:
and
a hot/cold water mixer according to claim 1;
a first water flow regulating device (26) connected before the cold water inlet;
a second water flow regulating device (24) connected before the hot water inlet,
the water flow regulating devices (24, 26) comprising a flow restricting member axially moveable within a water flow chamber, the flow restricting member including at least one of a tapered portion or a stepped portion, and wherein the size of a gap between the flow restricting member and internal walls of the water flow chamber varying according to an axial position of the flow restricting member, the water flow chamber having at least a first region and a second region whereby movement of the flow restricting member from the first region to the second region results in a step-change in the size of the gap between the flow restricting member and the internal walls of the water flow chamber.

5. A system according to claim 4, wherein the valve (36) is arranged to recirculate, in use, water within the mixing chamber such that the system maintains a desired temperature of water flowing through the water outlet at between 0 and 5 degrees Celsius of a user's selected outlet temperature.

6. A system according to claim 4, wherein the valve (36) is arranged to recirculate, in use, water within the mixing chamber such that the system maintains a desired temperature of water flowing through the water outlet at between 0 and 3 degrees Celsius of a user's selected outlet temperature.

## Patentansprüche

1. Warm-/Kaltwassermischer (10), umfassend:
eine Warm-/Kaltwasser-Mischkammer (20) mit:
einem Warmwassereinlass (12);
einem Kaltwassereinlass (14);
einem Wasserauslass (22) und
einem Druckentlastungssystem, das Folgendes umfasst:
einen Druckentlastungsauslass (34a) in der Mischkammer;
einen Druckentlastungseinlasse (34b) neben dem Wasserauslass und
ein Druckentlastungsventil (36), das sich zwischen dem Druckentlastungsauslass (34a) und dem
Druckentlastungseinlass (34b) erstreckt, wobei das Druckentlastungssystem so angeordnet ist, dass ein Teil des Wassers, das in die Mischkammer strömt, über das Ventil (36) zurück in die Mischkammer strömt,
**dadurch gekennzeichnet, dass**
das Druckentlastungsventil (36) einen Einlass umfasst, der mit einem Körper verbunden ist, welcher einen ersten Abschnitt und einen zweiten Abschnitt umfasst und eine Öffnung (40) hat, damit Wasser durch sie strömen kann, wobei das Ventil so angeordnet ist, dass bei einer Verringerung des Wasserdrucks auf den Ventileinlass während der Nutzung der erste und der zweite Abschnitt so angeordnet sind, dass sie eine Position einnehmen, in der der Druck des Wassers, das durch die Ventilöffnung strömt, so erhöht wird, dass Wasser, das durch das Ventil strömt, wieder in die Mischkammer eintritt.

2. Warm-/Kaltwassermischer gemäß Anspruch 1, wobei das Ventil (20) so angeordnet ist, dass es während der Nutzung Wasser in der Mischkammer so rezirkuliert, dass der Mischer eine gewünschte Temperatur des Wassers, das durch den Wasserauslass strömt, in einem Bereich von 0 bis 5 Grad Celsius um die von einem Benutzer gewählte Auslasstemperatur hält.

3. Warm-/Kaltwassermischer gemäß Anspruch 1, wobei das Ventil (20) so angeordnet ist, dass es während der Nutzung Wasser in der Mischkammer so rezirkuliert, dass der Mischer eine gewünschte Temperatur des Wassers, das durch den Wasserauslass strömt, in einem Bereich von 0 bis 3 Grad Celsius um die von einem Benutzer gewählte Auslasstemperatur hält.

4. System zur Wassertemperaturregelung in einem Warm-/Kaltwassermischer, wobei das System umfasst:
und
einen Warm-/Kaltwassermischer gemäß Anspruch 1;
eine erste Wasserstrom-Regelvorrichtung (26), die vor dem Kaltwassereinlass angeschlossen ist;
eine zweite Wasserstrom-Regelvorrichtung (24), die vor dem Warmwassereinlass angeschlossen ist,
wobei die Wasserstrom-Regelvorrichtungen (24, 26) ein
Durchflussbegrenzungselement beinhalten, das innerhalb einer Wasserstromkammer axial beweglich ist, das Durchflussbegrenzungselement einen kegeligen Abschnitt oder einen stufenförmigen Abschnitt oder beides enthält und wobei die Größe des Spalts zwischen dem Durchflussbegrenzungselement und Innenwänden der Wasserstromkammer entsprechend einer axialen Position des
Durchflussbegrenzungselements variieren, wobei die Wasserstromkammer mindestens einen ersten Bereich und einen zweiten Bereich hat, wodurch eine Bewegung des Durchflussbegrenzungselements aus dem ersten Bereich in den zweiten Bereich zu einer sprunghaften Änderung der Größe das Spalts zwischen dem Durchflussbegrenzungselement und den Innenwänden der Wasserstromkammer führt.

5. System gemäß Anspruch 4, wobei das Ventil (36) so angeordnet ist, dass es während der Nutzung Wasser in der Mischkammer so rezirkuliert, dass das System eine gewünschte Temperatur des Wassers, das durch den Wasserauslass strömt, in einem Bereich von 0 bis 5 Grad Celsius um die von einem Benutzer gewählte Auslasstemperatur hält.

6. System gemäß Anspruch 4, wobei das Ventil (36) so angeordnet ist, dass es während der Nutzung Wasser in der Mischkammer so rezirkuliert, dass das System eine gewünschte Temperatur des Wassers, das durch den Wasserauslass strömt, in einem Bereich von 0 bis 3 Grad Celsius um die von einem Benutzer gewählte Auslasstemperatur hält.

## Revendications

1. Mitigeur d'eau chaude/froide (10) comprenant:
une chambre de mélange d'eau chaude/froide (20) possédant :
une entrée d'eau chaude (12) ;
une entrée d'eau froide (14) ;
une sortie d'eau (22) ; et
un système de détente comprenant :
une sortie de détente (34a) dans la chambre de mélange ;
une entrée de détente (34b) adjacente à la sortie d'eau ; et
un clapet de détente (36) s'étendant entre la sortie de détente (34a) et l'entrée de détente (34b), le système de détente étant agencé pour refouler, à travers le clapet (36), dans la chambre de mélange, une partie de l'eau s'écoulant dans la chambre de mélange,
**caractérisé en ce que**
le clapet de détente (36) comprend une entrée raccordée à un corps comprenant une première partie et une deuxième partie, et possédant une ouverture (40) pour permettre l'écoulement de l'eau par celle-ci, le clapet étant agencé de sorte qu'en cas de réduction de la pression d'eau sur l'entrée de clapet utilisée, les première et deuxième parties sont agencées pour adopter une position dans laquelle la pression de l'eau s'écoulant par l'ouverture du clapet augmente de sorte que l'eau s'écoulant dans le clapet retourne dans la chambre de mélange.

2. Mitigeur d'eau chaude/froide selon la revendication 1, le clapet (20) étant agencé pour recycler, en cours d'usage, de l'eau au sein de la chambre de mélange de sorte que le mitigeur maintienne une température désirée pour l'eau s'écoulant par la sortie d'eau entre 0 et 5 degrés centigrades de la température de sortie sélectionnée par un utilisateur.

3. Mitigeur d'eau chaude/froide selon la revendication 1, le clapet (20) étant agencé pour recycler, en cours d'usage, de l'eau au sein de la chambre de mélange de sorte que le mitigeur maintienne une température désirée pour l'eau s'écoulant par la sortie d'eau entre 0 et 3 degrés centigrades de la température de sortie sélectionnée par un utilisateur.

4. Système de régulation de la température de l'eau dans un mitigeur d'eau chaude/froide, le système comprenant :
un mitigeur d'eau chaude/froide selon la revendication 1 ;
un premier régulateur de débit d'eau (26) connecté avant l'entrée d'eau froide ;
un deuxième régulateur de débit d'eau (24) connecté avant l'entrée d'eau chaude,
les régulateurs de débit d'eau (24, 26) comprenant un élément de limitation du débit pouvant être déplacé axialement au sein d'une chambre de débit d'eau, l'élément de limitation du débit comprenant au moins une d'une partie conique ou d'une partie étagée, et la taille d'un écart entre l'élément de limitation du débit et des parois internes de la chambre de débit d'eau variant en fonction d'une position axiale de l'élément de limitation du débit, la chambre de débit d'eau possédant au moins une première région et une deuxième région, de sorte que le mouvement de l'élément de limitation du débit de la première région à la deuxième région engendre un changement progressif de la taille de l'écart entre l'élément de limitation du débit et les parois internes de la chambre de débit d'eau.

5. Système selon la revendication 4, le clapet (36) étant agencé pour recycler en cours d'usage de l'eau au sein de la chambre de mélange de sortie afin que le système maintienne une température désirée de l'eau s'écoulant par la sortie d'eau entre 0 et 5 degrés centigrades de la température de sortie sélectionnée par un utilisateur.

6. Système selon la revendication 4, le clapet (36) étant agencé pour recycler en cours d'usage de l'eau au sein de la chambre de mélange de sortie afin que le système maintienne une température désirée de l'eau s'écoulant par la sortie d'eau entre 0 et 3 degrés centigrades de la température de sortie sélectionnée par un utilisateur.
